# EUROPEAN PATENT SPECIFICATION

(11) **EP 1 456 080 B1**
(45) Date of publication and mention of the grant of the patent: **28.01.2009**
(21) Application number: 02791528.9
(22) Date of filing: 30.07.2002
(51) Int. Cl.: B63G 8/00, B63G 8/39, G01S 15/00, G01S 15/88

(54) **AUTONOMOUS SYSTEM FOR UNDERWATER INSPECTION**
AUTONOMES SYSTEM ZUR UNTERWASSERINSPEKTION
SYSTEME AUTONOME POUR L'INSPECTION SOUS L'EAU

(30) Priority: 30.07.2001 SE 0102628
(43) Date of publication of application: 15.09.2004
(73) Proprietor: Pehrson, Martin, 690 45 Asbro (SE)
(72) Inventor: Pehrson, Martin, 690 45 Asbro (SE)
(86) International application number: PCT/SE2002/001419
(87) International publication number: WO 2003/011683

(56) References cited:
- US-A- 1 552 589
- US-A- 4 217 709
- US-A- 4 712 201
- US-B1- 6 308 649
- 'Valkommen ombord pa sjougglan' PROJEKT I OOP JAVA VAREN, [Online] 2000, XP002962805 Retrieved from the Internet: <URL:http://www2.ite.mh,se/ iing9922/html/rov.htm>

## Description

The present invention relates to a system for inspection and documentation of cross sections and surface profile of the inner walls of water-filled tunnels, comprising a submersible and a closed instrument carrying unit, externally attached devices for forward or backward propulsion and changing of heading, devices for positioning in the cross section of the tunnel and at least two sonar units with circular scanning fields.

Tunnels exist for instance in power plants for supplying or discharging of water. These tunnels are normally blasted in rocks and can have substantial lengths. Several 10^{ths} of kilometres are not unusual. To make the tunnels effective, no obstacles are allowed that can prevent the free water flow.
A fall can for instance be devastating and cause serious disturbances of the power production. When this occurs the operation must be stopped and the tunnel emptied of water to mend the damage. Falls cannot be prevented but regular inspections would be helpful to perform preventive maintenance, which then could be carried out according to plan and reduce the consequences of a break down. Inspection can be carried out in different ways. The most circumstantial is of course to empty the tunnel and simply letting personnel walk through the tunnel and carry out a visual inspection.

Today remote controlled submersibles exist designed for inspection purposes in tanks, tunnels and pipelines. The vehicles are usually equipped with devices for illumination of the surroundings and video cameras for documentation of the condition of the tunnel walls. For further documentation in the shape of images of the surface profile of the tunnel walls, the cross section of the tunnel, etc., the vehicle can be equipped with one or more sonars. The signals from these together with video recordings are also utilised for navigation of the vehicle. Thus the operator is placed outside the tunnel at a video monitor manoeuvring the vehicle by means of the image on the screen.

It is an extensive exchange of signals and power taking place between the vehicle and the operator and therefore a cable of high quality is required. Beside qualified transmission properties for power and signals, the cable must be strong enough for positioning and capturing the vehicle. An outer sheath resistant to the rough environment of water end mechanical effects from rugged tunnel walls is also required. Tunnel lengths of several kilometres are not unusual. Since the cable must be of a length sufficient to perform inspection of a long tunnel, it requires a large space and becomes difficult to handle. Besides it is not unusual that there are fixed obstacles protruding from the tunnel walls in the shape of shelves and consoles or ends of reinforcement bars. This involves a great risk of that the cable gets stuck and makes a capture impossible to carry out. Since a vehicle represents a great value, the economical consequences become serious.

Known vehicles for inspection of tunnels and larger pipelines are without exception remote controlled via a cable. The cable represents a big problem and limits the operational range for the vehicles known today. This means in turn that the most elongated tunnels cannot be fully inspected.

Thus it exists a need to eliminate the above mentioned problems that are present at vehicles being controlled by means of a cable. It is desirable that the vehicle can navigate on its own and follow a predetermined route in the tunnel. Simultaneously it should be able to record and store all data needed for a complete inspection and after fulfilled mission manoeuvre back to a predetermined point or to the launching point.
In tunnels with a moderate flow velocity of the water it is desirable that the vehicle can drift with the current along the desired route and keep attitude and heading while it carries out its inspection task.

An object with the present invention is to provide a vehicle that can be programmed with a control program that with known components for control and propulsion can manoeuvre the vehicle along a determined route in an elongated tunnel.

Another object is to provide a program that records position data from sonars and movement and position data from sensors while the vehicle moves for processing in a computer into navigation information.

A further object is to provide a program that stores data from sonars and video cameras for subsequent processing of images of the cross section, surface profile and running of a tunnel.

A further object is to provide a vehicle having a minimum of flow resistance and an exterior that prevents the vehicle from getting hooked

These objects are achieved with a vehicle that has a buoyancy equal to its weight and is balanced so that a vehicle related system of co-ordinates has its Y-axis in the vertical direction, that a first sonar unit is arranged in the front part of the instrument-carrying unit for continuous measurement of the distance to the tunnel walls in a first plane perpendicular to the tangent of a programmed route, preferably the centre line of the tunnel, that a second sonar unit is arranged on the upper or under side of the instrument-carrying unit with its scanning axis in or near the Y-axis of the vehicle for continuous measurement of the distance to the tunnel walls in a second plane, perpendicular to the first plane, and that a computer with a memory unit is programmed, partly with a data collection program for collecting and storing of distance data from the sonars together with way done, partly with a control program that from the distance data from the sonars calculates control commands for the devices for propulsion/change of heading and positioning of the vehicle so that it moves along the programmed route in the tunnel and partly with a calculation program for mathematical correction of the sonar displacement data at deviating tunnel direction in the X/Y-plane.

The other objects stated above are achieved by the characteristics given in the accompanying subclaims.

The invention will now be described by a preferred exemplary embodiment with references to the drawings appended, in which:
- Fig. 1: shows a side view of a schematic configuration of a submersible according to the invention;
- Fig. 2: shows a rear view of a schematic configuration of a submersible according to the invention;
- Fig. 3: shows a block diagram of the system according to the invention;
- Fig. 4: shows a scanning plane in the X/Z-plane;
- Fig. 5: shows a scanning plane in the Y/Z-plane;
- Fig. 6: shows a scanning plane in the X/Y-plane.

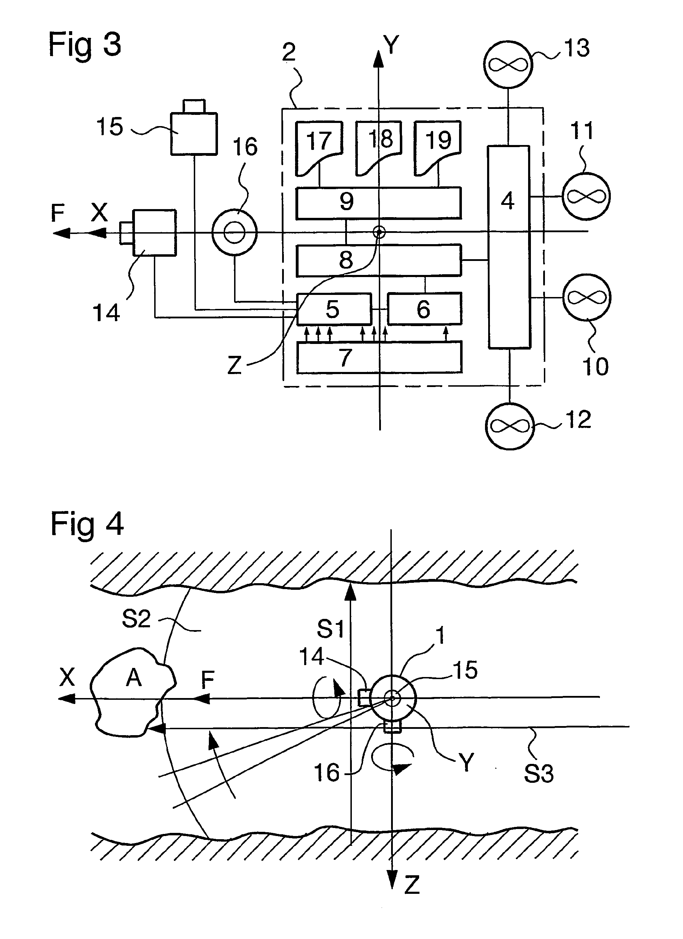

In all figures a vehicle-related system of co-ordinates X/Y/Z is defined to facilitate the understanding of the function of the different system parts and their location and the motion geometry. A route F along which the vehicle is moving is also shown.

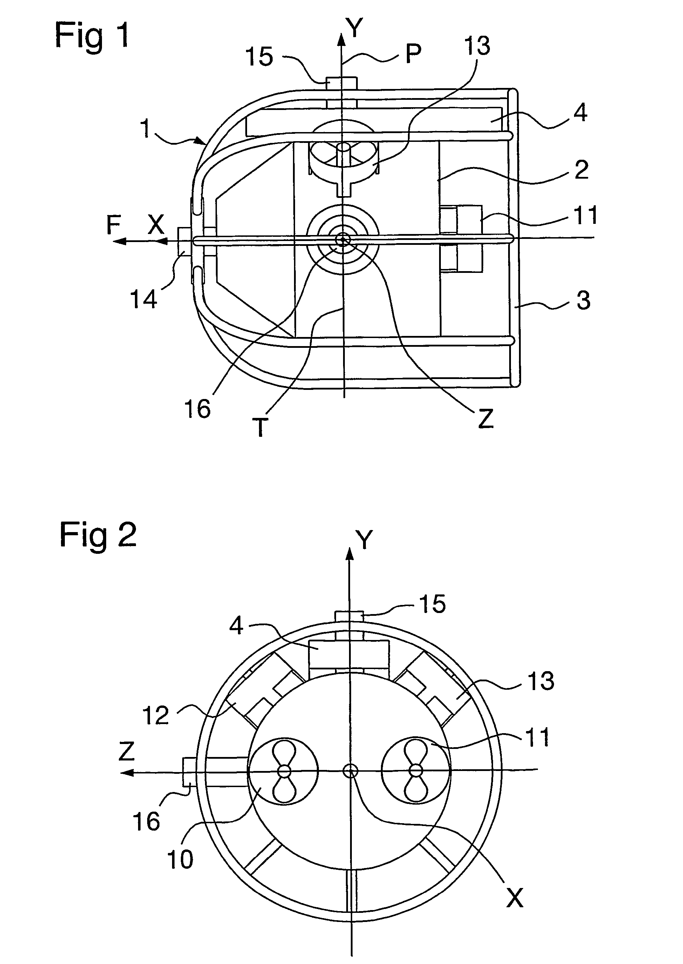

Figure 1 shows a vehicle 1 with an instrument-carrying unit 2. A protecting and fending framework 3 is encompassing the unit. The framework is designed to minimise the risk of being hooked in protruding objects. It is also intended to protect the devices for propulsion and measurement mounted on the outside of the vehicle from damage at possible contact with the tunnel walls or other objects. On the upper side of the vehicle, floating elements are attached to achieve the desired buoyancy and attitude in the X and Z -axis. For adjustment of the buoyancy and attitude, ballast tanks (not shown) can also be arranged inside the floating elements.
The block diagram in fig. 3 shows the components comprised in the system. The instrument-carrying unit 2, marked with a frame in the block diagram, comprises a control and regulation unit 4, a recording and documentation unit 5, an A/D-transducer 6 and a power source 7, preferably consisting of chargeable accumulators, and a computer 8 with a memory unit 9. The accumulators, which are heavy, are placed in the lower part of the instrument-canying unit. The centre of gravity will then be located beneath a point P on the Y-axis, where the resultant net force acts. This causes the vehicle to enter a stable position relative the axis X and Z in a neutral state in the water.
The vehicle is balanced to barely float in the stable position with its defined Y-axis in the vertical direction. I the rear part of the vehicle first and second motor powered propeller units 10 and 11 are mounted. By means of these the vehicle is able to move forward or backward and change heading in the X/Z-plane, i. e. rotate around the Y-axis. On the sides of the instrument-carrying unit 2, in the X/Z-plane, at least third and fourth motor powered propeller units 12 and 13 are mounted, with the rotation axis perpendicular to each other. The units are placed in about 45° angle against the Y- and Z-axis, whereby their component forces are utilised in an optimised manner to move the vehicle in the Y/Z-plane, i. e. place the vehicle on the desired route in the tunnel cross section.

In the front part of the instrument-carrying unit 2 a first sonar unit is mounted. It has its scanning axis along the longitudinal axis X of the vehicle and scans a first scanning plane S1 that preferably is perpendicular to the route F. A second sonar unit 15 is mounted on the upper side (alternatively the under side) of the instrument-carrying 2 unit with its scanning axis in or close to the Y-axis, i. e. perpendicular to the scanning axis of the first sonar unit and with its sonar-head protruding from the top side of the body. The second sonar is thus scanning in a second scanning plane S2, perpendicular to the first scanning plane S1. The sonars are placed with their heads outside the encompassing structure 3 to avoid disturbances from it. A third sonar 16 can, in an alternative embodiment of the system, be placed on the one side of the instrument-carrying unit to achieve greater accuracy of the registrations of the wall status and the running of the tunnel. The third sonar has its scanning axis in or parallel to the Z-axis and is thus scanning a third scanning plane S3, perpendicular to the first and second scanning planes S1 and S2.

In the preferred embodiment the position vertically and horizontally, i. e. in the X/Y-plane, is controlled by the third and fourth motor powered propeller units 12 and 13. However, water tunnels are not always straight and horizontal but can deviate both horizontally and vertically. For instance, with a climbing tunnel running a scanning plane that is not perpendicular to the route F is obtained since the vehicles is balanced to remain in a horizontal position. If the deviation of the tunnel path is relatively large the measured values should be corrected. This is performed in a calculation program 19 (fig. 3), which samples information about the tunnel path from the two, alternatively three sonars and which calculate the distance values as if the scanning plane would have been perpendicular to the route.
An alternative solution is that the first sonar 14 can be directed in the X/Y-plane with commands calculated from the sonar distance data. A scanning plane S1, which always is perpendicular to the route, is then achieved. The third sonar 16 can be mounted on either side of the instrument-carrying unit and contributes with further distance information in the scanning plane S3 for controlling the first sonar 14.

In yaw, i. e. the X/Z-plane the vehicle is controlled by the first and second motor powered propeller units 10 and 11 receiving real time commands calculated from the distance information from the sonars. Consequently there is no need for rotating the first sonar in the X/Z-plane or to correct the measured values of the scanning plane S1 with respect to horizontal deviations of the tunnel running.

The vehicle is designed to be conveyed through a water tunnel at a relatively low speed, 0,5 to 2 knots and typically 1 knot. The reason for the low speed is to minimise the energy consumption to achieve a long operating range in tunnels with small or no water flow. In tunnels with water flow the flow speed lies within the mentioned range and is relatively constant at a distance from the tunnel walls. The vehicle is then allowed to move with the flow while registering the tunnel path and the appearance of its walls. The vehicle is programmed to maintain a constant speed relative the tunnel by that the control information to the first and second propeller units is calculated with respect to the speed of the water flow.

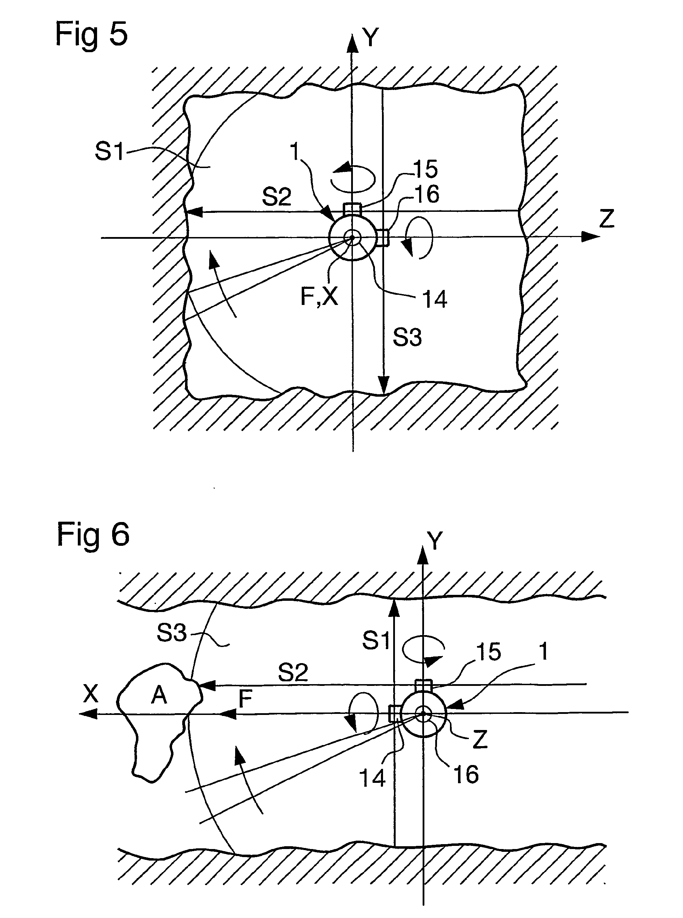

The function of the system is shown in the block diagram in fig. 2. The first sonar 14 scans the first scanning plane S1, which is parallel to the Y/Z-plane, and the second sonar 15 scans the second scanning plane S2, which is perpendicular to this and parallel to the X/Z-plane. The third sonar scans the scanning plane S3, which is perpendicular to the first two planes. The scanning planes are illustrated in the figures 4, 5 and 6. The analogue signals from the sonar echoes, which give the distance to surrounding objects and the walls are converted in the A/D-converter 6 into digital form and stored in the memory unit 9 in the computer 8.
In the memory unit program 17 for information collection for later evaluating of the tunnel status and control program for propulsion, positioning and recording of the route are stored. Also the before mentioned calculation program 19 is stored in the memory unit 9. The computer 8 retrieves the necessary data for navigation and control and performs real time calculations of control. The commands activate the units for the propulsion, positioning and heading in question via the control and regulating unit 4. In alternative configurations the vehicle can be equipped with speed sensors and in the control unit with sensors for sensing attitude changes in the X/Z-plane.

For positioning on the desired route F in the tunnel cross section, the control program 18 retrieves distance data in real time from the first sonar 14 in its scanning plane S1, that is parallel to the X/Z-plane. The control program continuously calculates commands for the third and fourth motor powered propeller units 12 and 13, that keeps the vehicle on the route F. Distance data in the X/Y-plane from the second sonar 16 indicates with aiming off, the change of direction of the tunnel and are used together with the position information to calculate correction data for the measured information in the scanning plane S1. Alternatively control data are sent to the first sonar 14 in the embodiment where it can be angled in the X/Y-ptane.
It is important that the vehicle moves with its X-axis in the same direction as the tangent of the route F in the horizontal plane, so that the first sonar 14 at every moment is scanning a plane perpendicular to the centre line of the tunnel and that the other sonars at every moment are scanning planes in the longitudinal direction of the tunnel.

If obstacles A are indicated on the route in the distance data from the second and possibly the third sonar, i. e. in the scanning planes S2 and S3, a command is calculated at a certain minimum distance and sent to the positioning and propulsion units to turn the vehicle in the present position and to follow the programmed route F back to the launching point. Hereby the commands to the first and second propulsion units, 10 and 11, are calculated to increase the speed of the vehicle to override a possible flow rate of the water.

The operating range of the vehicle is determined by the programmed speed, which is integrated over the operating time, digitised and stored in the memory unit 9. After completed operation the data collected from the sonars and possible other measuring means is handled and converted by known equipment to depictions of the surface profile, cross section and running of the tunnel. Analysis of these data then provides the base for decisions regarding measures of maintenance or repair.

The described, preferred exemplary embodiment should be regarded only as illustrative and is not intended to limit the invention. Within the scope of the claims it can be given other shapes. The body can for instance be given other shapes that positively affects the flow resistance as well as the internal units can be localised in different ways.

## Claims

1. System for inspection and documentation of cross section and surface profile of the inner walls in water filled tunnels, comprising a submersible (1) with a closed instrument-carrying unit (2), outwardly arranged devices vehicle (10,11) for propulsion forward or backward and changing of heading, devices (12,13) for positioning in the cross section of the tunnel and at least two sonar units (14,15) with circular scanning fields,
**characterised in**
**that** the vehicle has a buoyancy equal to its weight and is balanced so that a vehicle related system of co-ordinates (X/Y/Z) has its Y-axis in the vertical direction,
**that** the instrument carrying unit comprises a renewable energy source (7), that a first sonar unit (14) is arranged in the front part of the instrument-carrying unit with its scanning axis in the X-axis of the vehicle for continuous measurement of the distance to the tunnel walls in a first plane (S1) perpendicular to the tangent of a programmed route (F), preferably the centre line of the tunnel, and a second sonar unit (15) is arranged on the upper or under side of the instrument carrying unit with its scanning axis in or parallel to the Y-axis of the vehicle for continuous measurement of the distance to the tunnel walls in a second scanning plane (S2), perpendicular to the first plane (S1), and
**that** the system comprises a computer (8) with a memory unit (9), partly programmed with a data collection program for collecting and storing of distance data from the sonars together with way done, partly with a control program (18) that calculates control information from the sonar distance data, in real time for a control and regulating unit (4), which sends activating signals to the devices for propulsion/change of heading (10,11) and positioning (12,13) of the vehicle in the Y/Z-plane, so that it moves along the programmed route (F) with its X-axis in the direction of its tangent and partly with a calculation program (19) for mathematical correction of the distance data from the first sonar (14) at deviating running of the tunnel in the X/Y-plane.

2. A system according to claim 1, **characterised in that** a third sonar (16) is mounted on either side of the instrument-carrying unit for complementary measurement in a third scanning plane (S3) in the longitudinal direction of the tunnel.

3. A system according to any of the preceding claims, **characterised in that** an analogue/digital converter (6) converts analogue signals from the sonars (14,15,16) into digital information and stores it in the memory unit (9) in the computer (8) for later processing for depictions of the surface profile, cross section and running of the tunnel.

4. A system according to any of the preceding claims, **characterised in that** the instrument carrying unit and the units mounted on the outside are encompassed by a structure in the shape of a protecting and fending framework (3), and that the units enclosed in the instrument-carrying unit are arranged to locate the centre of gravity (T) of the vehicle beneath a point (P), where the resultant net lifting force acts, so that the vehicle takes a stable position in the water with its Y-axis in the vertical direction.

5. A system according to any of the preceding claims, **characterised in that** the control program (18) has a function in the memory unit (9) that monitors the distance information from the echoes in the X-axis from the second sonar (15) and when a certain distance to an obstacle (A) on the route (F) is registered, calculates commands for the first and second propulsion devices (10,11) to turn the vehicle in the present position in the X/Z-plane and move it backward along the programmed route (F).

6. A system according to any of the preceding claims, **characterised in that** the first sonar can be angled in the vertical plane (X/Y) by control signals calculated from the distance data from the second and third sonars (15,16) when the vehicle approaches a tunnel running that deviates in the X/Y-plane and thereby keep the scanning plane (S1) perpendicular to the route (F).

7. A system according to any of the preceding claims, **characterised in that** the vehicle is programmed to move along the route (F) relative the tunnel with a constant speed calculated with knowledge of the flow rate of the water, whereby the operating range is calculated by a function in the data collecting program (17) for printing of measured values along the route (F).

## Patentansprüche

1. System zur Inspektion und Dokumentation von Querschnitts- und Oberflächenprofilen der Innenwände in mit Wasser gefüllten Tunneln, welches ein unterwasserfahrzeug mit einer geschlossenen, Instruments tragenden Einheit (2), nach außen gerichtet angeordneten Vorrichtungen (10, 11) zum Vorwärts- oder Rückwärtsantrieb und zum Verändern der Fahrtrichtung, Vorrichtungen (12, 13) zur Positionierung in dem Querschnitt des Tunnels und mindestens zwei Sonareinheiten (14, 15) mit kreisförmigen Scannfeldern aufweist,
**dadurch gekennzeichnet, dass** das Fahrzeug eine Auftriebskraft hat, die seinem Gewicht entspricht, und derart ausbalanciert ist, dass ein fahrzeugbezogenes System von Koordinaten (X/Y/Z) seine Y-Achse in der vertikalen Richtung hat,
dass die Instrumente tragende Einheit eine erneuerbare Energiequelle (7) aufweist,
dass eine erste Sonareinheit (14), deren Scannachse in X-Richtung des Fahrzeugs verläuft, in dem vorderen Abschnitt der Instrumente tragenden Einheit zum kontinuierlichen Messen der Entfernung der Tunnelwände in einer Ebene (S1) senkrecht zu der Tangente einer programmierten Route (F), vorzugsweise der Mitellinie des Tunnels, angeordnet ist, und eine zweite Sonareinheit (15), deren Scannachse in der oder parallel zu der Y-Achse des Fahrzeugs verläuft, und die auf der oberen oder unteren Seite der Instrumente tragenden Einheit, zum kontinuierlichen Messen der Entfernung zu den Tunnelwänden in einer zweiten Scannebene (S2), die senkrecht zu der ersten Ebene (S1) ist, angeordnet ist, und
dass das System einen Computer (8) mit einer Speichereinheit (9) aufweist, die teilweise mit einem Datenerfaseungsprogramm zum Erfassen und Speichern von Entfernungsdaten von den Sonaren zusammen mit der erledigten Strecke programmiert ist, teilweise mit einem Steuerungsprogramm (18) programmiert ist, das Steuerungsinformationen in Echtzeit aus den Sonarentfernungsdaten für eine Steuerungs- und Regulierungseinheit (4) berechnet, die Aktivierungssignale an die Vorrichtungen für den Antrieb/die Änderung der Fahrtrichtung (10, 11) und zur Positionierung (12, 13) des Fahrzeugs in der Y/Z-Ebene sendet, so dass es sich mit seiner X-Achse entlang der programmierten Route (F) in der Richtung ihrer Tangente bewegt, und teilweise mit einem Berechnungsprogram (19) für die mathematische Korrektur der Entfernungsdaten von dem ersten Sogar (14) bei abweichendem Verlauf des Tunnels in der X/Y-Ebene programmiert ist.

2. System nach Anspruch 1, **dadurch gekennzeichnet, dass** ein dritter Sogar (16) auf jeder Seite der Instrumente tragenden Einheit für ergänzende Messungen in einer dritten Scannebene (S3) in der Längsrichtung des Tunnels befestigt ist.

3. System nach einem der vorhergehenden Ansprüche, **dadurch gekennzeichnet, dass** ein Analog/Digital-Wandler (6) analoge Signale von den Sonaren (14, 15, 16) in digitale Informationen umwandelt und diese in der Speichereinheit (9) in dem Computer (8) zur spätere Verarbeitung für Abbildungen des OberflächenProfils, des Querschnitts und Verlaufs des Tunnels speichert.

4. System nach einem der vorhergehenden Ansprüche, **dadurch gekennzeichnet, dass** die eine Instrumente tragende Einheit und die an der Außenseite befestigten Einheiten von einer Struktur in der Form einen schützenden und abwehrenden Rahmens (3) umgeben ist, und dass die in der Instrumente tragenden Einheit vorhandenen Einheiten derart angeordnet sind, dass sie den Schwerpunkt (T) des Fahrzeugs unterhalb eines Punktes (P), an dem die resultierende Nettoauftriebskraft wirkt, legen, so dass das Fahrzeug eine stabile Position im Wasser mit seiner Y-Achse in der vertikalen Richtung annimmt.

5. System nach einem der vorhergehenden Ansprüche, **dadurch gekennzeichnet, dass** das Steuerungsprogramm (18) eine Funktion in der Speichereinheit (9) aufweist, die die Entfernungeinformationen von den Echos in der X-Achse von dem zweiten Sonar (15) überwacht, und, wenn eine bestimmte Entfernung zu einem Hindernis (A) auf der Route (F) registriert wird, Befehle für die ersten und zweiten Antriebsvorrichtungen (10, 11) berechnet, um das Fahrzeug in der gegenwärtigen Position in der X/Z-Ebene zu drehen und es zurück entlang der programmierten Route (F) zu bewegen.

6. System gemäß einem der vorhergehenden Ansprüche, **dadurch gekennzeichnet, dass** das erste Sonar in der vertikalen Ebene (X/Y) durch Steuerungssignale, die aus den Entfernungsdaten von den zweiten und dritten Sonaren (15, 16) berechnet werden, wenn das Fahrzeug sich einem Tunnelverlauf nähert, der in der X/Y-Ebene abknickt, gewinkelt werden kann und somit die Scannebene (S1) senkrecht zur Route (F) behält.

7. System nach einem der vorhergehenden Ansprüche, **dadurch gekennzeichnet, dass** das Fahrzeug derart programmiert ist, dass es sich entlang der Route (F) relativ zum Tunnel mit einer konstanten Geschwindigkeit bewegt, die mit der Kenntnis der Strömungsgeschwindigkeit des Wassers berechnet wird, wodurch der Arbeitsbereich durch eine Funktion in dem Datenerfassungsprogramm (17) zum Drucken der gemessenen werte entlang der Route (F) berechnet wird.

## Revendications

1. Système pour l'inspection et la documentation du profil de sections transversales et de surfaces de parois intérieures dans des tunnels remplis d'eau, comprenant un véhicule submersible (1) équipé d'une unité porte-instruments fermée (2), de dispositifs (10, 11) disposés vers l'extérieur pour la propulsion vers l'avant ou vers l'arrière et le changement de cap, de dispositifs (12, 13) de positionnement dans la section transversale du tunnel et d'au moins deux unités de sonar (14, 15) à champs d'exploration circulaires,
**caractérisé en ce que** le véhicule présente une flottabilité égale à son poids et est équilibré en sorte qu'un système de coordonnées (X/X/Z) attaché au véhicule a son axe Y selon la direction verticale,
**en ce que** l'unité porte-instruments comprend une source d'énergie renouvelable (7),
**en ce qu'**une première unité de sonar (14) est disposée à la partie avant de l'unité porte-instruments avec son axe d'exploration selon l'axe X du véhicule pour la mesure en continu de la distance aux parois du tunnel dans un premier plan (S1) perpendiculaire à la tangente d'une route programmée (F), de préférence la ligne centrale du tunnel, une deuxième unité de sonar (15) étant disposée sur le côté supérieur ou inférieur de l'unité porte-instruments avec son axe d'exploration orienté selon ou parallèlement à l'axe Y du véhicule pour la mesure en continu de la distance aux parois du tunnel dans un deuxième plan d'exploration (S2) perpendiculaire au premier plan (S1),
et **en ce que** le système comprend un calculateur (8) équipé d'une unité de mémoire (9), partiellement programme avec un programme de recueil de données pour le recueil et la mémorisation de données de distance en provenance des sonars en association avec le chemin parcouru, partiellement avec un programme de contrôle (18) qui, à partir des données de distance des sonars, calcule en temps réel des informations de contrôle pour une unité de contrôle et de réglage (4), laquelle envoie des signaux d'activation aux dispositifs de propulsion/changement de cap (10, 11) et de positionnement (12, 13) du véhicule dans le plan Y/Z, en sorte que ce dernier se déplace le long de la route programmée (F) avec son axe X dans la direction de sa tangente, et partiellement avec un programme de calcul (19) pour la correction mathématique des données de distance en provenance du premier sonar (14) en cas d'écart de parcours du tunnel dans le plan X/Y.

2. Un système selon la revendication 1, **caractérisé en ce qu'**un troisième sonar (16) est monté de chaque côté de l'unité porte-instruments pour une mesure complémentaire dans un troisième plan d'exploration (S3) dans la direction longitudinale du tunnel.

3. Un système selon l'une quelconque des revendications précédentes, **caractérisé en ce qu'**un convertisseur analogique-numérique (6) convertit des signaux analogiques en provenance des sonars (14, 15, 16) en des informations numériques et stocke ces informations dans l'unité de mémoire (9) dans le calculateur (8) pour un traitement ultérieur pour des représentations du profil de surface, de section transversale et de parcours du tunnel.

4. Un système selon l'une quelconque des revendications précédentes, **caractérisé en ce que** l'unité porte-instruments et les unités montées sur l'extérieur sont englobées par une structure en forme de châssis de protection et de garde-corps (3), et **en ce que** les unités que renferme l'unité porte-instruments sont disposées de manière à placer le centre de gravité (T) du véhicule au-dessous du point d'application (P) de la résultante des forces de poussée, de sorte que le véhicule prend une position stable dans l'eau avec son axe Y selon la direction verticale.

5. Un système selon l'une quelconque des revendications précédentes, **caractérisé en ce que** le programme de contrôle (18) a une fonction dans l'unité de mémoire (9) qui surveille l'information de distance dérivée des échos dans l'axe X fournis par le deuxième sonar (15) et qui, lorsqu'une certaine distance à un obstacle (A) sur la route (F) est enregistrée, calcule des ordres à destination des premier et deuxième dispositifs de propulsion (10, 11) à l'effet de faire tourner le véhicule dans sa position instantanée dans le plan X/Z et de lui faire rebrousser chemin le long de la route programmée (F).

6. Un système selon l'une quelconque des revendications précédentes, **caractérisé en ce que** le premier sonar peut être orienté angulairement dans le plan vertical (X/Y) par des signaux de commande calculés à partir des données de distance générées par les deuxième et troisième sonars (15, 16) lorsque le véhicule s'approche d'un trajet de tunnel qui s'écarte dans le plan X/Y et de maintenir ainsi le plan d'exploration (S1) perpendiculaire à la route (F).

7. Un système selon l'une quelconque des revendications précédentes, **caractérisé en ce que** le véhicule est programmé pour se déplacer le long de la route (F) par rapport au tunnel avec une vitesse constante calculée avec la connaissance de la vitesse d'écoulement de l'eau, ce grâce à quoi le domaine de fonctionnement est calculé par une fonction dans le programme de recueil de données (17) pour impression de valeurs mesurées le long de la route (F).
